# EUROPEAN PATENT SPECIFICATION

(11) **EP 4 172 515 B1**
(45) Date of publication and mention of the grant of the patent: **03.09.2025**
(21) Application number: 21740182.7
(22) Date of filing: 30.06.2021
(51) Int. Cl.: F16J 15/34

(54) **MECHANICAL SEAL ASSEMBLY AND METHOD OF ASSEMBLY OF A MECHANICAL SEAL**
MECHANISCHE DICHTUNGSANORDNUNG UND VERFAHREN ZUR MONTAGE EINER MECHANISCHEN DICHTUNG
ENSEMBLE JOINT MÉCANIQUE ET PROCÉDÉ D'ASSEMBLAGE D'UN JOINT MÉCANIQUE

(30) Priority: 30.06.2020 GB 202010011
(43) Date of publication of application: 03.05.2023
(73) Proprietor: John Crane UK Ltd., Slough, Berkshire SL1 4LU (GB)
(72) Inventor: QUARMBY, Nic, Slough Berkshire SL1 4LU (GB)
(74) Representative: Leach, Sean Adam
(86) International application number: PCT/GB2021/051659
(87) International publication number: WO 2022/003350

(56) References cited:
- EP-A1- 4 170 206
- DE-A1- 102016 210 202
- GB-A- 2 570 164
- US-A- 5 199 172
- US-A- 5 199 172
- US-A1- 2015 159 758
- US-A1- 2015 159 758
- US-A1- 2015 176 712

## Description

### Technical field

The present disclosure relates generally to methods and apparatus, and more particularly to mechanical seals for rotating equipment, and still more particularly to dry gas seals.

### Background

Typical mechanical seals, such as dry gas seals may be used in rotating equipment such as, for example, compressors and blowers. Rotating equipment typically comprises a driving side (e.g. shaft side) and a driven side (e.g. bearing side).

Mechanical seals for rotating equipment comprise a seal assembly and a flow of fluid through the seal assembly.

Seal assemblies comprise a mating ring and a primary ring. In their simplest forms, both the mating ring and the primary ring can be considered annular circular cylinders (although it should be noted that in most realisations the cross sections are in fact non-rectangular). It will be appreciated that an annular circular cylinder comprises: an inner radial surface; an outer radial surface; two axial faces (e.g. faces which are bordered by an edge of the inner radial surface and an edge of the outer radial surface). In such rings, the inner radial surface bounds a central hole through the cylinder, and a central longitudinal axis (e.g. a straight line, perpendicular to radial and circumferential directions of the annular circular cylinder) passes through this central hole.

In a seal assembly, the mating ring is positioned so that an axial face of the mating ring opposes an axial face of the primary ring. The mating ring is disposed on the driving side of the rotating equipment and is positioned so that an axis of rotation of the rotating equipment is coincident with the central longitudinal axis of the mating ring. The mating ring is rotatable about the axis of rotation of the rotating equipment e.g. by the shaft which drives the rotating equipment. The primary ring is stationary, and presented to the driven side of the rotating equipment. An axis of rotation of the rotating equipment is coincident with the central longitudinal axis of the primary ring. The primary ring comprises notches on its outer radial surface.

The primary ring sits in a stator housing (e.g. a rotationally stationary component of the driven side of the rotating equipment), and pins which are fixed to the stator housing sit in the notches of the primary ring to prevent rotation of the primary ring. To fix them in place, the pins may be partially disposed within carriers (e.g. channels) in the stator housing of the rotating equipment. In some examples, the pins may be provided by so-called "dimples" e.g. protrusions which are part of the stator housing e.g. integrally formed with the stator housing . In other words, the pin and the stator housing may comprise a single unit.

A fluid flow, such as a dry gas flow, provides a thin film of fluid between the opposing faces of the primary ring and the mating ring. The thin film, sometimes referred to as a fluid film, generates hydrostatic forces (e.g. forces which are present regardless of whether the mating ring is stationary or rotating) and hydrodynamic forces (e.g. forces which are present only when the mating ring rotates) which are exerted on the mating ring and primary ring. Grooves may be provided on the mating ring (e.g. logarithmic spiral grooves) which are involved in generating the hydrodynamic forces, for example, when the mating ring rotates, the grooves may shear fluid flow towards the central longitudinal axis of the mating ring which increases the pressure of the fluid flow.

In examples, the fluid may comprise, a process gas and/or a buffer gas.

In examples, the mechanical seal may be a wet seal wherein the fluid flow comprises oil or another liquid.

The hydrostatic and hydrodynamic forces urge the mating ring and primary ring apart. The thin fluid film also prevents wear of the mating ring and primary ring. The mating ring, the primary ring and the fluid flow between the opposing axial faces of the rings cooperate to provide a mechanical seal. The mechanical seal, seals the driving side (e.g. a bearing side) of the rotating equipment from the driven side (e.g. a gas side) of the rotating equipment.

Typical primary rings may comprise a notch which is cylindrical. When a pin is disposed within the notch, there is line-contact between notch and pin when alignment is perfect. The line-contact becomes a thin rectangle of contact due to elastic deformation of the notch and the pin. Thus, due to the extended contact area, contact stresses between the notch and the pin remain manageable. When alignment is not perfect, a point contact may develop at the edge of the cylindrical notch. Elastic deformation, in this case may not be enough to adequately reduce the contact load.

In some typical rotating equipment contact stresses are reduced by providing a pin with a spherical or otherwise profiled surface. This works when there is no relative axial movement between the primary ring and the stator housing. However, in some rotating equipment, the primary ring must be able to slide axially to accommodate relative axial movement of the rotating and rotationally stationary sides (e.g. the driven and drive sides) of the coupling. Spherical and non-cylindrical pins are therefore of limited usefulness.

US 2015/159758 A1 describes an engine coolant pump seal comprising a primary seal ring, a mating ring adjacent the primary seal ring, a first O-ring seated inside the primary seal ring and a second O-ring seated inside the mating ring.

### Summary

Aspects of the invention are set out in the independent claims and optional features are set out in the dependent claims and aim to address the above described technical problems, and related problems. Aspects of the disclosure may be provided in conjunction with each other, and features of one aspect may be applied to other aspects.

Embodiments of the present disclosure aim to increase contact area between a first surface feature of a primary ring (such as a notch) and a second surface feature of a stator housing by profiling at least one of the two surface features to avoid point or edge contact between them. Advantageously, this may reduce stresses on a primary ring and accordingly may reduce the likelihood of damaging the primary ring. The first surface feature may comprise a notch, e.g. in an outer radial surface of the primary ring.

The second surface feature may comprise a protrusion such as a pin or ridge, or other feature complementary with the first surface feature e.g. a dimple, recess or similar.

In some examples, the pins may be integral protrusions which form part of the stator housing. In other words, the pin and the stator housing may comprise a single unitary member.

Embodiments of the present disclosure provide primary rings comprising one or more notches wherein the notches have a surface profile configured to control contact stress between the notch and the pin.

The disclosure provides a primary ring for a mechanical seal in a rotating equipment, the mechanical seal comprising a mating ring for co-operation with the primary ring to promote the seal, the primary ring having a central longitudinal axis and comprising: a notch disposed in an outer radial surface of the primary ring, wherein an axial outer edge of the notch is radially deeper than an axially inner part of the notch.

A primary ring may comprise a notch disposed in an outer radial surface of the primary ring wherein the axial outer edge of the notch has a radial depth greater than an axially inner part of the notch.

Embodiments of aspects of the disclosure provide a notch geometry which, relative to a notch in a typical primary ring, increases the contact area between the notch and the pin which reduces stresses (e.g. Hertzian stresses when the primary ring and pin are misaligned) on the notch. Advantageously, reducing the stresses of the notch reduces the likelihood of the notch chipping and/or fracturing. Therefore, a primary ring with increased durability may be provided.

Reducing the likelihood of the notch chipping and/or fracturing has the added advantage of allowing the primary ring to be formed of materials with lower damage thresholds (e.g. lower stress ratings; lower strain ratings). For example, primary rings may be formed of silicon carbide or tungsten carbide.

The notch may be configured to fit at least part of a pin of the rotating equipment to: prevent circumferential movement of the primary ring; and permit axial movement of the primary ring.

The notch and the pin may be complementarily shaped to prevent circumferential movement of the primary ring; and permit axial movement of the primary ring. For example, the pin may be any cylindrical shape. Correspondingly, the notch may have a shape comprising a portion of a cross section which is larger than the cross section of the cylindrical shape, e.g. the groove is sized larger than the pin. This may be arranged so that the notch and the pin may be able to slide relative to one another along the length of the pin (e.g. axially with respect to the primary ring).

The pin may be a cylinder, for example: an oblique cylinder; a right cylinder; a circular cylinder; a right circular cylinder; an oblique prism; a right prism. One or more ends of the pin may be tapered.

The primary ring may be configured to remain rotationally stationary, relative to the rotational axis of the rotating equipment, in order to reduce wear on components (other than the mating ring) which abut the primary ring.

In some rotating equipment the mating ring may be movable axially along the rotational axis of the rotating equipment. The primary ring may be configured to move axially along the rotational axis of the rotating equipment in order to remain in contact with the mating ring, advantageously maintaining the seal provided by the primary ring and the mating ring.

The rotating equipment may comprise an elastic member positioned between the primary ring and the stator housing. For example, the elastic member may be a spring. The spring may be configured to urge the primary ring towards the mating ring. The spring may be compressed (e.g. elastically deformed) by the primary ring and the stator housing. The spring provides a reaction force between the stator housing and the primary ring. The reaction force provided by the spring acts on the primary ring in an axial direction to urge the primary ring towards to the mating ring.

Axial edges of the notch may be wider than the cross section of pin.

An axially inner part of the notch (e.g. axially towards the middle of the ring) may be radially shallower than an axial edge of the notch. In some examples, a circumferentially inner part of the notch may be radially deeper than a circumferential edge of the notch. In some examples, an axially inner part of the notch and a circumferentially inner part of the notch may be coincident.

The notch may be symmetrical about a longitudinal plane containing the central longitudinal axis and the circumferentially central part of the notch. The notch may be symmetrical about an axial plane perpendicular to and containing a point of the central longitudinal axis and containing, for example, the axially central part of the notch.

A surface of the notch may be configured to misfit with the pin to increase contact surface area between the surface of the notch and the pin in the event of misalignment of the primary ring.

Counter-intuitively, shaping the notch and/or pin to provide a misfit between the notch and the pin may increase contact area between the surface of the notch and the pin in the event of misalignment of the primary ring.

A primary ring which provides an increased contact area between the notch and the pin may reduce stresses (e.g. Hertzian stresses) on the notch. Advantageously, reducing the stresses of the notch may reduce the likelihood of the notch chipping and/or fracturing. Therefore, a primary ring with increased durability may be provided.

Reducing the likelihood of the notch chipping and/or fracturing may have the added advantage of allowing lighter materials to be used in the construction of the primary ring. For example, the primary ring may be formed of materials with comparatively lower damage thresholds (e.g. lower stress ratings; lower strain ratings). For example, primary rings may be formed of silicon carbide or tungsten carbide.

The surface of the notch may be configured to fit the pin. For examples, the notch may be shaped to conform with the shape of the portion of the pin received by the notch.

The surface curvature of the primary ring may be continuous between the circumferential edges of the notch and the outer radial surface of the primary ring.

The surface curvature of the primary ring may be continuous between the axial outer edge of the notch and an axial surface of the primary ring.

Discontinuities (e.g. cusps; sharp edges) in surface curvature may be more likely to be damaged by stresses on the surface (e.g. stresses due to contact between the primary ring and pin) than a surface which has a continuous surface curvature. Conveniently, reducing discontinuities in surface curvature from the primary ring between the circumferential edges of the notch and the outer radial surface of the primary ring may reduce the likelihood of the primary ring chipping and/or fracturing. Conveniently, reducing discontinuities in surface curvature from the primary ring between the axial outer edge of the notch and an axial surface of the primary ring may reduce the likelihood of the primary ring chipping and/or fracturing.

The primary ring may comprise more than one notch. For example, the primary ring may comprise any of: six notches; twelve notches; and, twenty four notches. Advantageously, increasing the number of notches in the primary ring may reduce the distance between neighbouring notches. Reducing the distance between neighbouring notches may reduce distortion of the primary ring in use and accordingly, increasing the number of notches may reduce the likelihood of damaging the primary ring.

In examples, the primary ring may comprise both: a first set of notches which receive a pin; and, a second set of notches which do not receive a pin. For example: one notch may receive a pin; two notches may receive a pin; three notches may receive a pin; four notches may receive a pin; five notches may receive a pin; or, six notches may receive a pin. Notches which do not receive a pin may comprise features of the present disclosure, for example: an axial outer edge of the notch may be radially deeper than an axially inner part of the notch; the notches may be configured to fit at least part of a pin of the rotating equipment to: prevent circumferential movement of the primary ring; and permit axial movement of the primary ring; axial edges of the notch may be wider than the pin; a surface of the notch may be configured to misfit with the pin to increase contact surface area between the surface of the notch and the pin in the event of misalignment of the primary ring. Alternatively, notches which do not receive a pin may not comprise features of the present disclosure, such as those described above.

Providing additional notches increases the total contact area between the notches of the primary ring and the pins. Increasing the contact area between each notch and each respective pin, reduces the magnitude of stress at each notch. By reducing the magnitude of the stress at each notch, the likelihood of chipping and/or fracture of the notch may be reduced.

In some examples, the additional notches may comprise properties of any of the notches described herein.

The disclosure provides the use of the primary ring of any aspect of the disclosure in a rotating equipment in a mechanical seal. In examples, the mechanical seal may be a dry gas seal comprising a dry gas flow between opposing axial faces of the mating ring and primary ring. In examples the fluid may be, for example, a process gas and/or a buffer gas.

An aspect of the disclosure provides a seal assembly for a rotating equipment, the seal assembly comprising: a mating ring, configured to rotate about an axis of rotation; a primary ring for providing a gas sealing between an axial face of the primary ring and an axial face of the mating ring, the primary ring comprising a notch in an outer radial surface of the primary ring wherein the notch comprises a notch surface having a saddle shape; a pin, wherein at least part of the pin is disposed within the notch of the primary ring, wherein the pin and the saddle-shaped notch cooperate to prevent rotation of the primary ring about the axis of rotation of a compressor.

The saddle shape may comprise: an inward curvature along a circumferential direction of the primary ring; and, an outward curvature along an axial direction of the primary ring.

In some examples, a tangent taken in an axial direction at an axial central point of the notch and a tangent taken in an axial direction at an axial edge of the notch are relatively offset by 5 degrees, or more preferably 4 degrees, or more preferably 3 degrees, or more preferably 2.5 degrees, or more preferably 2.0 degrees. The outward curvature provided by such an arrangement may provide a misfit between the notch and the pin in the event of misalignment of the notch and the pin.

The disclosure provides a method of assembly of a mechanical seal, comprising: disposing a mating ring in contact with a primary ring to form a seal; wherein the gas seal comprises a pin at least partially within a notch in the primary ring, wherein the notch comprises a saddle shape arranged to misfit the pin thereby to increase contact area between the pin and the notch in the event of misalignment of the primary ring.

The contact between the pin and the notch may be a misfit configured to increase contact surface area between the notch and the pin in the event of misalignment.

The disclosure also provides a method of manufacturing a primary ring for a mechanical seal in a rotating equipment, the method comprising: forming an initial notch in an outer radial surface of a ring, wherein an axial edge of the initial notch is radially deeper than an axially inner part of the initial notch.

These and other methods may further comprise: forming a final notch from the initial notch, wherein a circumferentially inner part of the final notch is radially deeper than a circumferential edge of the final notch.

Any of the steps of: forming an initial notch in an outer radial surface of a ring, wherein an axial edge of the initial notch is radially deeper than an axially inner part of the initial notch; forming a final notch from the initial notch, wherein a circumferentially inner part of the final notch is radially deeper than a circumferential edge of the final notch; may be performed by polishing.

Any of the steps of: forming an initial notch in an outer radial surface of a ring, wherein an axial edge of the initial notch is radially deeper than an axially inner part of the initial notch; forming a final notch from the initial notch, wherein a circumferentially inner part of the final notch is radially deeper than a circumferential edge of the final notch; may be performed by grinding.

Any of the steps of: forming an initial notch in an outer radial surface of a ring, wherein an axial edge of the initial notch is radially deeper than an axially inner part of the initial notch; forming a final notch from the initial notch, wherein a circumferentially inner part of the final notch is radially deeper than a circumferential edge of the final notch; may be performed by grolishing.

Herein the term 'grolishing' may be understood to mean: a process incorporating both grinding techniques and polishing techniques.

Grinding and/or polishing and/or grolishing may be performed by computer numerically controlled (CNC) polishing machines and metrology. The polishing technology may use spinning tools covered with a polishing pad. A computer-controlled robotic system to position and orientate the tool may be programmed to accurately adjust the position, speed and pressure of the polishing head. Conveniently, ultra-smooth and nanometre accurate surfaces may be obtained on almost any material including silicon carbide and tungsten carbide.

In some examples, computer-aided design and computer-aided manufacturing (CAD/CAM) techniques may be used to form notches in the primary ring.

Grinding and/or polishing and/or grolishing may be performed by hand.

A combination of manual grinding and hand finishing (e.g. blending) may be used to form the notches

A combination of grinding and/or polishing and/or grolishing may be performed by both machines and by hand.

A desired notch geometry may be obtained using any manufacturing method, for example an additive manufacturing method such as 3D printing. This may be achieved by forming a 3D surface with 'lead' surfaces (e.g. with a small lead angle of 1 or 2 degrees) at each edge of the notch. Blending the lead surfaces to the cylindrical centre surface effectively applies a large radius to the contact area, controlling contact stress when alignment is compromised. The leads may eliminate the possibility of contact at the edge of the notch.

The primary ring may comprise, for example it may consist essentially of: silicon carbide; graphite; silicon nitride.

The pin may comprise, for example it may consist essentially of: silicon carbide; tungsten carbide; steel; nickel-molybdenum-chromium alloy (or other metal alloy).

### Drawings

Embodiments of the disclosure will now be described, by way of example only, with reference to the accompanying drawings, in which:
Figure 1A illustrates a longitudinal cross-sectional view of a rotating equipment comprising a dry gas seal;
Figure 1B illustrates a simplified exploded perspective view of the rotating equipment comprising a dry gas seal of Figure 1A;
Figure 2A illustrates a perspective view of an example primary ring of embodiments of the disclosure;
Figure 2B illustrates a longitudinal cross-sectional view along line X-X of the primary ring of Figure 2A;
Figure 2C illustrates an axial cross-sectional view of part of a circumferential ridge of the primary ring of Figure 2A and 2B;
Figure 2D illustrates a radial cross-sectional view, along the line Y-Y, of part of the circumferential ridge Figure 2C;
Figure 3 shows a flowchart depicting a method of manufacture of a primary ring.

### Specific description

The present disclosure relates to a primary ring for a seal assembly. In order to contextualise the primary ring of the present disclosure, a structural description of a seal assembly as a whole is provided first, then features of the primary ring of the disclosure will be described thereafter.

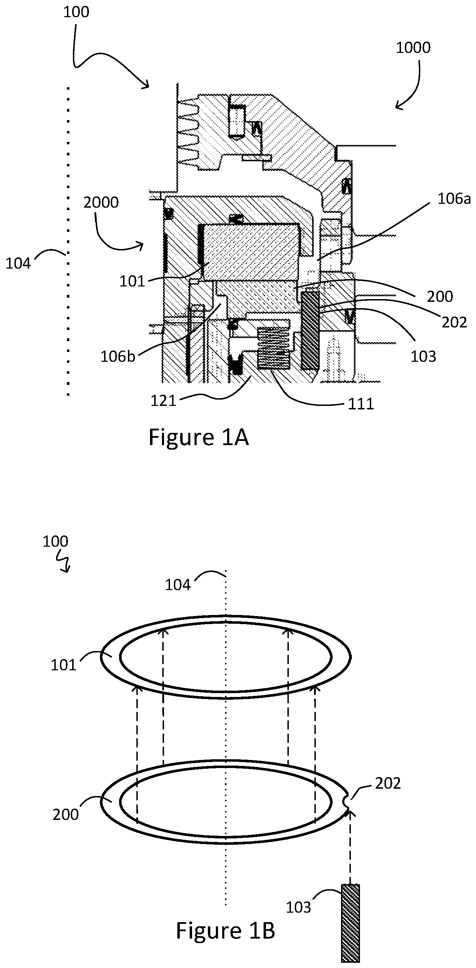

Figure 1A illustrates a longitudinal cross-sectional view of a rotating equipment comprising a dry gas seal; Figure 1B illustrates a simplified exploded perspective view of a dry gas seal of Figure 1A. The seal assembly 100 (e.g. a dry gas seal) comprises: a rotationally stationary assembly 1000; a rotating assembly 2000. The rotationally stationary assembly 1000 comprises: an elastic member 111; a stator housing 121; a primary ring 200 comprising a notch 202; a pin 103; a rotational axis 104; a first part of a dry gas flow path 106a; and, a second part of a dry gas flow path 106b. The rotating assembly 2000 comprises: a mating ring 101.

Both the mating ring 101 and the primary ring 200 are annular circular cylinders (as described above), therefore, both the mating ring 101 and the primary ring 200 comprise a central hole delimited by an inner radial surface. The mating ring 101 is positioned to so that an axial face of the mating ring opposes an axial face of an annular cylindrical primary ring 200.

The mating ring 101 is connectable to a shaft for driving the rotating equipment and is configured to rotate about the rotational axis 104 of the rotating equipment. The mating ring 101 is movable along the rotational axis 104 of the rotating equipment e.g. in response to displacement of the shaft. It can thus be seen that the mating ring 101 is disposed on the rotating assembly 2000 of the dry gas seal and is positioned so that an axis of rotation 104 of the rotating equipment is coincident with the central longitudinal axis of the mating ring.

The primary ring 200 is configured to resist rotation about the rotational axis 104 of the rotating equipment. The rotationally stationary assembly 1000 comprises the pin 103 and at least part of the pin 103 may be disposed within the notch 202 of the primary ring 200 such that the notch cooperates with the pin 103 to prevent rotation of the primary ring about the axis of rotation 104 of the rotating equipment. For example, the notch 202 and the pin may be shaped to cooperatively prevent rotation of the primary ring 200.

The primary ring 200 is axially movable along the rotational axis 104 of the rotating equipment. A part of the pin 103 is disposed within the notch 202 of the primary ring 200 such that the notch cooperates with the pin 103 to permit axial movement of the primary ring along the axis of rotation 104 of the rotating equipment. For example, the notch and the pin may be shaped to permit the primary ring 200 to slide along the rotational axis 104.

The primary ring 200 is disposed on the rotationally stationary assembly 1000 of the seal assembly 100 and positioned so that an axis of rotation 104 of the rotating equipment is coincident with the central longitudinal axis of the primary ring. The primary ring 200 comprises notches 202 in its outer radial surface 201. The notches 202 each receive a corresponding pin 103. Each pin 103 is fixed to the stator housing 121 of the rotating equipment thereby to prevent rotation of the primary ring 200 about the rotational axis 104 of the rotating equipment. To fix them in place, the pins 103 may be partially disposed within carriers (e.g. channels in a rotationally stationary component of the driven side of the rotating equipment) in the stator housing 121 of the rotating equipment.

The primary ring 200 may comprise, for example it may consist essentially of: silicon carbide; tungsten carbide.

The pin 103 may comprise, for example it may consist essentially of: silicon carbide; tungsten carbide.

The first part of the dry gas flow path 106a and the second part of the dry gas flow path 106b respectively define an upstream end and a downstream end of a dry gas flow path. The opposing axial faces of the primary ring 200 and the mating ring 101 are disposed in the dry gas flow path such that the dry gas flow path can be fixed between the opposing axial faces of the primary ring 200 and the mating ring 101 when the two are in motion to provide a dry gas flow between the axial faces of the two rings.

When dry gas is flowed from the first part of the dry gas flow path 106a, to the second part of the dry gas flow path 106b, dry gas passes between the opposing axial faces of the mating ring 101 and the primary ring 200. The dry gas flow provides a thin fluid film of dry gas between the opposing faces of the mating ring 101 and the primary ring 200. The thin fluid film of dry gas generates hydrostatic forces (e.g. forces which are present regardless of whether the mating ring 101 is stationary or rotating) and hydrodynamic forces (e.g. forces which are present only when the mating ring 101 rotates) which are exerted on the mating ring 101 and primary ring 200. Grooves may be provided on the mating ring (e.g. logarithmic spiral grooves) which are involved in generating the hydrodynamic forces, for example, when the mating ring 101 rotates, the grooves may shear dry gas flow towards the central longitudinal axis (e.g. the rotational axis 104 of the rotating equipment) of the mating ring 101 which increases the pressure of the dry gas flow.

The rotating equipment may comprise an elastic member 111 positioned between the primary ring 200 and the stator housing 121. For example, the elastic member 111 may be a spring (as shown in Figure 1). The spring 111 may be configured to urge the primary ring 200 towards the mating ring 101. The spring 111 may be compressed (e.g. elastically deformed) by the primary ring 200 and the stator housing. The spring provides a reaction force between the stator housing and the primary ring. The reaction force provided by the spring acts on the primary ring in an axial direction to urge the primary ring towards to the mating ring.

In some examples, the rotating equipment may comprise an elastic member positioned between the mating ring and the stator housing. For example, the elastic member may be a spring. The spring may be configured to urge the mating ring towards the primary ring. The spring may be compressed (e.g. elastically deformed) by the mating ring and the stator housing. The spring provides a reaction force between the stator housing and the mating ring. The reaction force provided by the spring acts on the mating ring in an axial direction to urge the mating ring towards to the primary ring. In some examples, the rotating equipment may comprise two elastic members: a first elastic member disposed between the mating ring and the stator housing (as described above); and, a second elastic member disposed between the primary ring and the stator housing (as described above).

The thin fluid film also prevents wear of the mating ring 101 and primary ring 200. The mating ring 101, the primary ring 200 and the dry gas flow between the opposing axial faces of the rings, cooperate to provide a dry gas seal. The dry gas seal, seals the driving side (e.g. a bearing side) of the rotating equipment from the driven side (e.g. a gas side) of the rotating equipment.

In some examples, the seal assembly 100 may be disposed within a compressor.

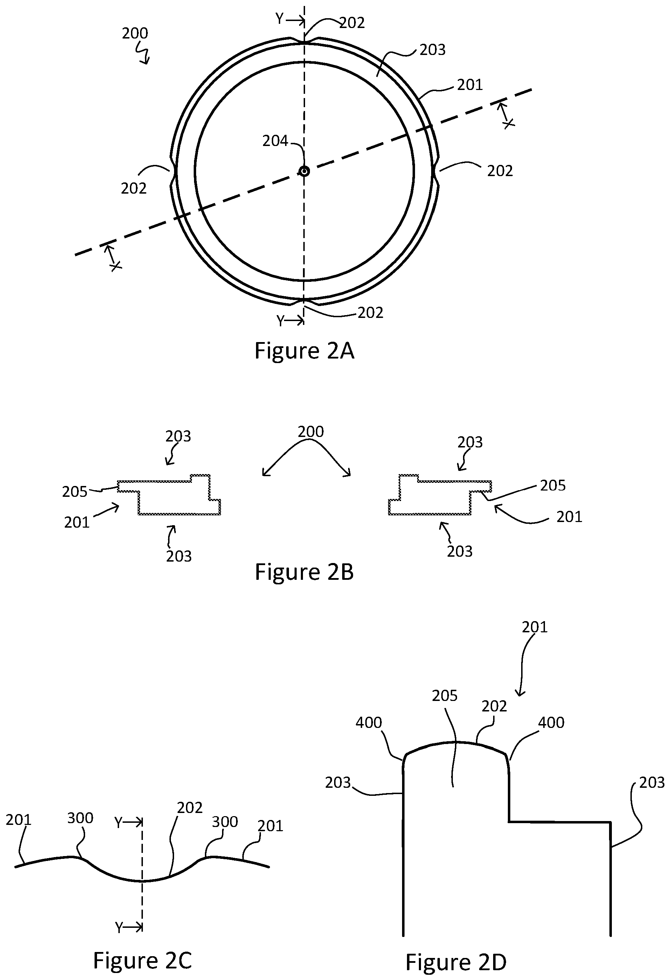

Figure 2A illustrates a perspective view of an example primary ring of embodiments of the disclosure; Figure 2B illustrates a longitudinal cross-sectional view along line X-X of the primary ring of Figure 2A; Figure 2C illustrates an axial cross-sectional view of part of the circumferential ridge of the primary ring of Figure 2A and 2B; and, Figure 2D illustrates a radial cross-sectional view, along the line Y-Y, of part of the circumferential ridge 205 of Figure 2C.

The primary ring 200, shown in Figures 2A to 2D comprises: an outer radial surface 201 comprising, a circumferential ridge 205; notches 202; axial surfaces 203; a central longitudinal axis 204; two circumferential edges 300 of the notch; and, axial edges 400 of the notch.

The outer radial surface 201 of the primary ring is disposed between axial surfaces 203. The outer radial surface 201 comprises a circumferential ridge 205. In the example shown in Figures 2A to 2D the circumferential ridge is a radially projecting part of the outer radial surface 201. In embodiments, such as the example shown in Figures 2A to 2D the primary ring may be circularly symmetrical about the central longitudinal axis 204. In embodiments, the primary ring 202 is an annular circular cylinder (described above). The central longitudinal axis 204 of the primary ring 202 passes through a central hole formed by the primary ring (e.g. the space defined by the inner radial surface of primary ring 202).

The notches 202 are disposed in the circumferential ridge 205 of the outer radial surface 201 of the primary ring 200. In the example shown in Figures 2A to 2D, the notches 202 are disposed in the circumferential ridge 205 however, in other examples a primary ring without a circumferential ridge may be provided and one or more notches may be disposed in the outer radial surface 201 of the primary ring.

For each notch, two circumferential edges 300 are disposed between the outer radial surface 201 and the notch 202. For each notch, the two axial edges 400 are disposed between the notch 202 and one of the axial surfaces 203 of the primary ring.

Each notch 202 is configured to receive at least part of a pin 103 to: prevent circumferential movement of the primary ring 200; and allow axial movement of the primary ring 200.

Each notch 202 and respective pin 103 are complementarily shaped to cooperate with one another to provide a combination configured to prevent circumferential movement of the primary ring 200; and permit axial movement of the primary ring 200. The pin 103 shown in Figure 1 has a cylindrical shape. Each of the notches 202 has an axial edge which is radially deeper than an axially inner part of the notch and axial edges of the notch are wider than the pin 103. It can thus be seen that the primary ring 200 is inhibited from rotation about the rotational axis 104 of the seal assembly 100 (and indeed inhibited from rotation about the central longitudinal axis 204) because the notch 202 is not shaped to slide circumferentially (e.g. by rotation about the rotational axis 104 of the rotating equipment) over the pin 103. It can thus be seen that the primary ring 200 is axially movable along the rotational axis 104 of the rotating equipment because the notch 202 in the primary ring is shaped to allow the primary ring 200 to axially slide over the pin 103.

Each of the notches 202 is saddle-shaped. The saddle shape comprises: an inward curvature along a circumferential direction of the primary ring (shown in Figure 2C); and, an outward curvature along an axial direction of the primary ring (shown in Figure 2D). Each notch 202 may comprise a channel or depression in the outer radial surface of the primary ring 200.

The radial depth of the notch along a circumferential direction of the notch is greater at a circumferentially inner portion of the notch than at a circumferential edge 300 of the notch. (e.g. the notch has an inward curvature in a circumferential direction of the primary ring). In the example shown, the change in radial depth of the notch in a circumferential direction: monotonically increases from a first circumferential edge 300 of the notch to the circumferentially central part of the notch; and, monotonically decreases from the circumferentially central part of the notch to a second circumferential edge 300 of the notch.

The radial depth of the notch 202 along an axial direction of the notch is greater at an axial edge 400 of the notch than at an axially inner portion of the notch (e.g. the notch has an outward curvature in an axial direction of the primary ring). In the example shown in Figures 2A to 2D, the change in radial depth along an axial direction of the notch 202: monotonically decreases from a first axial edge 400 of the notch to the axial central part of the notch; and, monotonically increases from the axially central part of the notch to a second axial edge 400 of the notch.

The notch 202 is configured to misfit with the pin 103 to increase contact surface area between the surface of the notch and the pin in the event of misalignment of the primary ring 200. The outward curvature in the axial direction of the notch 202 is misfits with the pin to increase contact surface area between the surface of the notch and the pin 103 in the event of misalignment of the primary ring 200. Thus it can be seen that the stresses associated with misalignment are spread over a large area and accordingly, the stresses are more manageable than in typical primary rings.

The primary ring 200 is configured to reduce stresses between the pin 103 and the notch 202.

The surface curvature of the primary ring 200 is continuous between the axial outer edges 400 of each of the notches and an axial surface 203 of the primary ring. The surface curvature of the primary ring is continuous between the circumferential edges 300 of each of the notches and the outer radial surface 201 of the primary ring. For each notch, the surface curvature of the primary ring is continuous between the notch 202 and the circumferential edges 300 of the notch. For each notch, the surface curvature of the primary ring is continuous between the notch 202 and the axial outer edges 400 of the notch. It can thus be seen that removing abrupt edges (e.g. discontinuities in surface curvature of the primary ring 200) reduces stresses between notches and their respective pins.

In examples wherein the notch has an outward curvature along an axial direction of the primary ring, the axial outer edges of the notch may comprise an inflexion point in the curvature of the primary ring (not shown).

In some examples the surface curvature of the primary ring may be discontinuous (e.g. a cusp) between the circumferential edges of each notch and the outer radial surface of the primary ring. In some examples, the surface curvature of the primary ring is discontinuous (e.g. a cusp) between each notch and the circumferential edges of the notch. In some examples the surface curvature of the primary ring may be discontinuous (e.g. a cusp) between the outer axial edges of each notch and the outer axial surface of the primary ring. In some examples, the surface curvature of the primary ring is discontinuous (e.g. a cusp) between each notch and the axial outer edges of the notch.

Any number of notches 202 may be disposed within the outer radial surface 201 of the primary ring. In the example shown in Figures 2A to 2D, there are four notches 202 disposed within the circumferential ridge 205 of the outer radial surface 201 of the primary ring. The four notches 202 equidistantly spaced from one another about the central longitudinal axis 204. As described above, the central longitudinal axis 204 of the primary ring passes through the central space defined by the inner radial surface of the primary ring. When the primary ring is disposed in a dry gas seal in a rotating equipment, the central longitudinal axis 204 of the primary ring is coincident with the rotational axis of the rotating equipment 104.

In some examples, a single notch may be provided. In some examples, a plurality of notches may be disposed within the outer radial surface of the primary ring. In examples wherein a plurality of notches is provided, the notches may be spaced equidistantly from one another about the central longitudinal axis of the primary ring.

Each notch 202 is symmetrical about a plane containing the central longitudinal axis 204 and the axially central part of the notch. Each notch 202 is symmetrical about a plane containing the central longitudinal axis 204 and the circumferentially central part of the notch. In some examples, the one or more notches may not be symmetrical about a plane containing the central longitudinal axis and the axially central part of the notch. In some examples, the one or more notches may not be symmetrical about a plane containing the central longitudinal axis and the circumferentially central part of the notch.

Each notch 202 has a geometry which, relative to a notch in a typical primary ring, increases the contact area between the notch and the pin which reduces stresses (e.g. Hertzian stresses) on the notch. Advantageously, reducing the stresses of the notch reduces the likelihood of the notch chipping and/or fracturing. Therefore, a primary ring of the present disclosure has an increased durability compared to typical primary rings.

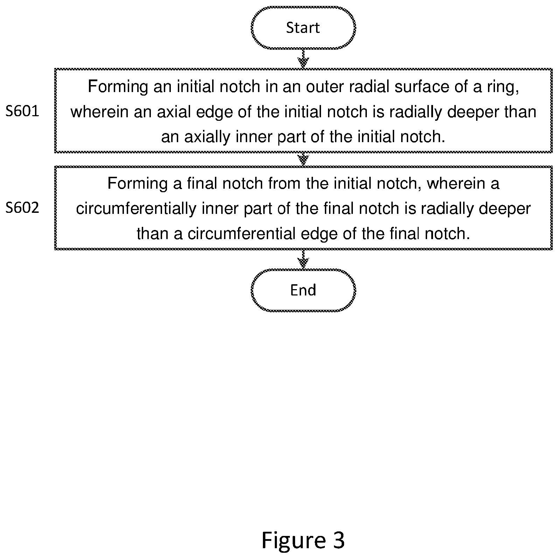

Figure 3 shows a flowchart depicting a method of manufacture of a primary ring.

A method of manufacture of a primary ring is detailed below.

S601 forming an initial notch in an outer radial surface of a ring, wherein an axial edge of the initial notch is radially deeper than an axially inner part of the initial notch.

S602 forming a final notch from the initial notch, wherein a circumferentially inner part of the final notch is radially deeper than a circumferential edge of the final notch.

The final notch is formed from the initial notch so that the final notch has a both an axial edge of the final notch radially deeper than an axially inner part of the final notch and a circumferentially inner part of the final notch radially deeper than a circumferential edge of the final notch.

Any of the steps S601 and S602 may each be performed by, any of the following means either, singly or in combination: grinding; polishing; grolishing.

Any of grinding, polishing and/or grolishing may be perform by any of the following methods, either singly or in combination: computer numerically controlled (CNC) polishing machines and metrology; computer-aided design and computer-aided manufacturing (CAD/CAM) techniques; by hand; manual grinding; hand finishing (e.g. blending).

Any feature of any one of the examples disclosed herein may be combined with any selected features of any of the other examples described herein. For example, features of methods may be implemented in suitably configured hardware, and the configuration of the specific hardware described herein may be employed in methods implemented using other hardware. The description or claiming of a method in which steps are mentioned in a particular order is not intended to imply that any one step necessarily precedes another. Unless otherwise stated, the steps of such methods may be applied in any appropriate sequence.

It will be appreciated from the discussion above that the embodiments shown in the Figures are merely exemplary, and include features which may be generalised, removed or replaced as described herein and as set out in the claims. With reference to the drawings in general, it will be appreciated that they are merely exemplary and should not be taken to imply that any particular structure is essential to the invention other than as expressly set forth herein.

The term radial surface is used herein to define a surface which faces radially outwards from a ring (e.g. the outward edge which faces away from its axis). It will be appreciated in the context of the present disclosure that such radial surfaces may be aligned tangentially (i.e. they may be in the form of a curved outer surface of a cylinder).

The term axial surface is used herein to define a surface which is perpendicular to the axis of a ring (e.g. in the manner of the flat end of a cylinder).

Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, modifications not described above may also be employed without departing from the scope of the invention, which is defined in the accompanying claims.

## Claims

1. A primary ring (200) for a mechanical seal in a rotating equipment, the seal comprising a mating ring for co-operation with the primary ring to promote the seal, the primary ring having a central longitudinal axis (204) and comprising:
a saddle shaped notch (202) disposed in an outer radial surface (201) of the primary ring, wherein an axial outer edge (400) of the notch is radially deeper than an axially inner part of the notch.

2. The primary ring (200) of claim 1, wherein the notch (202) is configured to fit at least part of a pin (103) of the rotating equipment to:
prevent circumferential movement of the primary ring (200); and
permit axial movement of the primary ring (200).

3. The primary ring of claim 2, wherein axial edges of the notch (202) are wider than the pin (103).

4. The primary ring (200) of any preceding claim, wherein the surface curvature of the primary ring is continuous between the circumferential edges (300) of the notch (202) and the outer radial surface (201) of the primary ring.

5. The primary ring (200) of any preceding claim, wherein the surface curvature of the primary ring is continuous between the axial outer edge (400) of the notch and an axial surface (203) of the ring.

6. The primary ring (200) of any preceding claim, wherein the primary ring comprises more than one notch (202).

7. The use of the primary ring of any preceding claim in a rotating equipment in a mechanical seal.

8. A seal assembly (100) for a mechanical seal for rotating equipment, the seal assembly comprising:
a mating ring (101), configured to rotate about an axis of rotation;
a primary ring (200) according to any of claims 1 to 6 for providing a gas sealing between an axial face of the primary ring and an axial face of the mating ring;
a pin (103), wherein at least part of the pin is disposed within the notch of the primary ring, wherein the pin and the saddle-shaped notch cooperate to prevent rotation of the primary ring about the axis of rotation of a compressor.

9. The seal assembly (100) of claim 8, wherein the saddle shape comprises:
an inward curvature along a circumferential direction of the primary ring (200); and,
an outward curvature along an axial direction of the primary ring.

10. A method of assembly of a mechanical seal for rotating equipment, comprising:
providing a mating ring (101) and a primary ring (202);
arranging an axial face of the mating ring in contact with an axial face of the primary ring; and
arranging a retaining pin (103) in a notch (202) in the primary ring, wherein the notch is disposed in an outer radial surface of the primary ring, and wherein the notch comprises a saddle shape, and wherein an axial outer edge (400) of the notch is radially deeper than an axially inner part of the notch.

11. The method of claim 10 wherein the retaining pin (103) comprises a cylinder, aligned with an axis of rotation of the rotating equipment.

12. The method of claim 11 wherein the saddle shape provides a misfit between the pin (103) and the notch (202) to increase contact area between the pin and the notch in the event of misalignment between the primary ring and the axis of rotation (104).

13. The method of any of claims 10 to 12 wherein the pin (103) comprises a circular cylinder and the cross section of the notch (202) is a segment of a circle.

14. The method of claim 12 or 13 wherein the saddle shape is provided by the cross section of the notch (202) being larger at the axial faces of the primary ring (200) than towards the axial centre of the primary ring and wherein the shape of the notch is uniform throughout the axial depth of the primary ring.

## Patentansprüche

1. Primärring (200) für eine mechanische Dichtung in einer rotierenden Vorrichtung, wobei die Dichtung einen Gegenring zum Zusammenwirken mit dem Primärring umfasst, um die Dichtung zu fördern, wobei der Primärring eine zentrale Längsachse (204) aufweist und Folgendes aufweist:
eine sattelförmige Kerbe (202), die in einer radialen Außenfläche (201) des Primärrings angeordnet ist, wobei eine axiale Außenkante (400) der Kerbe radial tiefer ist als ein axial innerer Teil der Kerbe.

2. Primärring (200) nach Anspruch 1, wobei die Kerbe (202) so konfiguriert ist, dass sie zu mindestens einem Teil eines Stifts (103) der rotierenden Vorrichtung passt zum:
Verhindern einer Umfangsbewegung des Primärrings (200); und
Zulassen einer Axialbewegung des Primärrings (200).

3. Primärring nach Anspruch 2, wobei axiale Kanten der Kerbe (202) breiter sind als der Stift (103).

4. Primärring (200) nach einem vorherigen Anspruch, wobei die Oberflächenkrümmung des Primärrings zwischen den Umfangskanten (300) der Kerbe (202) und der radialen Außenfläche (201) des Primärrings kontinuierlich ist.

5. Primärring (200) nach einem vorherigen Anspruch, wobei die Oberflächenkrümmung des Primärrings zwischen der axialen Außenkante (400) der Kerbe und einer axialen Fläche (203) des Rings kontinuierlich ist.

6. Primärring (200) nach einem vorherigen Anspruch, wobei der Primärring mehr als eine Kerbe (202) umfasst.

7. Verwendung des Primärrings nach einem vorherigen Anspruch in einer rotierenden Vorrichtung in einer mechanischen Dichtung.

8. Dichtungsanordnung (100) für eine mechanische Dichtung für eine rotierende Vorrichtung, wobei die Dichtungsanordnung Folgendes umfasst:
einen Gegenring (101), der zum Drehen um eine Drehachse konfiguriert ist;
einen Primärring (200) nach einem der Ansprüche 1 bis 6 zum Bereitstellen einer Gasdichtung zwischen einer axialen Fläche des Primärrings und einer axialen Fläche des Gegenrings;
einen Stift (103), wobei mindestens ein Teil des Stifts innerhalb der Kerbe des Primärrings angeordnet ist, wobei der Stift und die sattelförmige Kerbe zusammenwirken, um eine Drehung des Primärrings um die Drehachse eines Kompressors zu verhindern.

9. Dichtungsanordnung (100) nach Anspruch 8, wobei die Sattelform Folgendes umfasst:
eine Einwärtskrümmung entlang einer Umfangsrichtung des Primärrings (200); und
eine Auswärtskrümmung entlang einer axialen Richtung des Primärrings.

10. Verfahren zum Zusammenbauen einer mechanischen Dichtung für eine rotierende Vorrichtung, das Folgendes umfasst:
Bereitstellen eines Gegenrings (101) und eines Primärrings (202);
Anordnen einer axialen Fläche des Gegenrings in Kontakt mit einer axialen Fläche des Primärrings; und
Anordnen eines Haltestifts (103) in einer Kerbe (202) im Primärring, wobei die Kerbe in einer radialen Außenfläche des Primärrings angeordnet ist, und wobei die Kerbe eine Sattelform aufweist, wobei eine axiale Außenkante (400) der Kerbe radial tiefer ist als ein axial innerer Teil der Kerbe.

11. Verfahren nach Anspruch 10, wobei der Haltestift (103) einen Zylinder umfasst, der mit einer Drehachse der rotierenden Vorrichtung ausgerichtet ist.

12. Verfahren nach Anspruch 11, wobei die Sattelform eine Fehlpassung zwischen dem Stift (103) und der Kerbe (202) bietet, um die Kontaktfläche zwischen dem Stift und der Kerbe im Falle einer Fehlausrichtung zwischen dem Primärring und der Drehachse (104) zu vergrößern.

13. Verfahren nach einem der Ansprüche 10 bis 12, wobei der Stift (103) einen kreisförmigen Zylinder umfasst und der Querschnitt der Kerbe (202) ein Kreissegment ist.

14. Verfahren nach Anspruch 12 oder 13, wobei die Sattelform dadurch erzielt wird, dass der Querschnitt der Kerbe (202) an den axialen Flächen des Primärrings (200) größer ist als in Richtung der axialen Mitte des Primärrings, und wobei die Form der Kerbe über die gesamte axiale Tiefe des Primärrings gleichförmig ist.

## Revendications

1. Bague primaire (200) pour un joint mécanique dans un équipement rotatif, le joint comprenant une bague d'accouplement pour une coopération avec la bague primaire afin de promouvoir le joint, la bague primaire ayant un axe longitudinal central (204) et comprenant :
une encoche en forme de selle (202) disposée dans une surface radiale externe (201) de la bague primaire, où un bord externe axial (400) de l'encoche est plus profond radialement qu'une partie axialement interne de l'encoche.

2. Bague primaire (200) de la revendication 1, où l'encoche (202) est configurée pour recevoir au moins une partie d'une broche (103) de l'équipement rotatif afin :
d'empêcher un mouvement circonférentiel de la bague primaire (200) ; et
de permettre un mouvement axial de la bague primaire (200).

3. Bague primaire de la revendication 2, où les bords axiaux de l'encoche (202) sont plus larges que la broche (103).

4. Bague primaire (200) de n'importe quelle revendication précédente, où la courbure superficielle de la bague primaire est continue entre les bords circonférentiels (300) de l'encoche (202) et la surface radiale externe (201) de la bague primaire.

5. Bague primaire (200) de n'importe quelle revendication précédente, où la courbure superficielle de la bague primaire est continue entre le bord externe axial (400) de l'encoche et une surface axiale (203) de la bague.

6. Bague primaire (200) de n'importe quelle revendication précédente, où la bague primaire comporte plus d'une encoche (202).

7. Utilisation de la bague primaire de n'importe quelle revendication précédente dans un équipement rotatif dans un joint mécanique.

8. Ensemble joint (100) pour un joint mécanique pour un équipement rotatif, l'ensemble joint comprenant :
une bague d'accouplement (101), configurée pour tourner autour d'un axe de rotation ;
une bague primaire (200) selon n'importe lesquelles des revendications 1 à 6 pour fournir une étanchéité au gaz entre une face axiale de la bague primaire et une face axiale de la bague d'accouplement ;
une broche (103), au moins une partie de la broche étant disposée au sein de l'encoche de la bague primaire, où la broche et l'encoche en forme de selle coopèrent pour empêcher la rotation de la bague primaire autour de l'axe de rotation d'un compresseur.

9. Ensemble joint (100) de la revendication 8, où la forme en selle comprend :
une courbure vers l'intérieur le long d'une direction circonférentielle de la bague primaire (200) ; et,
une courbure vers l'extérieur le long d'une direction axiale de la bague primaire.

10. Procédé d'assemblage d'un joint mécanique pour un équipement rotatif, comprenant :
le fait de fournir une bague d'accouplement (101) et une bague primaire (202) ;
le fait d'agencer une face axiale de la bague d'accouplement pour une mise en contact avec une face axiale de la bague primaire ; et
le fait d'agencer une broche de retenue (103) dans une encoche (202) dans la bague primaire, où l'encoche est disposée dans une surface radiale externe de la bague primaire, et où l'encoche comporte une forme en selle, et où un bord externe axial (400) de l'encoche est plus profond radialement qu'une partie axialement interne de l'encoche.

11. Procédé de la revendication 10 où la broche de retenue (103) comprend un cylindre, aligné avec un axe de rotation de l'équipement rotatif.

12. Procédé de la revendication 11 où la forme en selle donne une inadéquation entre la broche (103) et l'encoche (202) afin d'augmenter la zone de contact entre la broche et l'encoche dans le cas d'un mauvais alignement entre la bague primaire et l'axe de rotation (104).

13. Procédé de n'importe lesquelles des revendications 10 à 12 où la broche (103) comprend un cylindre circulaire et la section transversale de l'encoche (202) est un segment d'un cercle.

14. Procédé de la revendication 12 ou 13 où la forme en selle est fournie par la coupe transversale de l'encoche (202) qui est plus grande au niveau des faces axiales de la bague primaire (200) que vers le centre axial de la bague primaire et où la forme de l'encoche est uniforme sur la totalité de la profondeur axiale de la bague primaire.
